# EUROPEAN PATENT APPLICATION

(11) **EP 1 834 525 A1**
(43) Date of publication of application: **19.09.2007**
(21) Application number: 07250942.5
(22) Date of filing: 07.03.2007
(51) Int. Cl.: A22C 13/00, A23L 1/317

(54) **Coextrusion process for producing a meat product**

(30) Priority: 14.03.2006 US 375439
(71) Applicant: Conagra Foods, Inc., Omaha, NE 68102 (US)
(72) Inventor: Shulman, Michael N., Minneapolis, Minnesota 55419 (US); Mikula, Mario, Omaha, Nebraska 68102 (US); Bohac, Joseph, Bolingbrook, Illinois 60440 (US); Foral, Matt, Omaha, Nebraska 68122 (US); Mert, Behic, Ankara 06580 (TR)
(74) Representative: Johnstone, Helen Margaret

(57) **Abstract**

A process for the production of coextruded collagen encased food products, such as meat products, and the resulting meat products. The process includes the extrusion of a meat emulsion with an amount of a collagen gel that includes a cross-linking agent coating the exterior of the meat emulsion. Further, the coated meat emulsion is exposed to a coagulation solution that includes an amount of a alkalinity agent, with a pH range of 10 to 14. The coagulation solution hardens the collagen casing meat product producing a final meat product with a casing strength of greater than 500g.

## Description

### FIELD OF INVENTION

The invention relates to a process for the production of coextruded collagen encased food products, such as meat products, and the resulting food products. Specifically, the process and product relate to a collagen encased product and method of production, and more particularly a collagen encased sausage food product and method of production, but it may also be used for the production of other collagen encased food products including other meats, cheeses, fish, seafood, eggs, vegetables, or combinations thereof.

### BACKGROUND OF INVENTION

The production of sausage is an ancient tradition dating back centuries. Traditional techniques taught stuffing a meat, in an emulsion or semisolid form, into a natural or artificial casing, thereby producing a meat product (sausage). These techniques have been replaced with current coextrusion processing, because of the increased labor resources required for traditional stuffing techniques. Coextrusion is the process of forming a meat product from an emulsion while simultaneously coating the meat emulsion with a collagen gel, to produce a coated meat product. The coated meat is then placed in or subjected to a coagulation solution, a brine (salt) solution, that coagulates the collagen gel, causing the coated meat product to produce a surface casing. This coagulated collagen gel takes the place of the traditional casing which are either natural or artificial.

Generally, known methods of coagulation are practiced that cause the water in the gel to be bound or removed, whereby a rigid or firm surface casing is formed to encase the meat. After the coated meat is subjected to the coagulation solution, typically a brine (salt) solution, the meat product is dried to further enhance the strength of the casing. Problematically, the casings are weaker than traditional techniques, which means there are limitations in the amount and types of processing, such as cooking and smoking that can occur after contact with the brine. Also, adding a drying step is inefficient and requires additional economical resources, including time and energy.

Currently known methods for producing meat casings that do not require air drying, require exposure of the coated meat to the coagulation solution for extended time periods. Extended exposure increases the amount of brine (salt) absorbed into the meat product. Increased absorption of the brine (salt) solution increases the pH of the meat product and harms (typically kills) the fermentation culture (i.e. the lactic-acid producing culture) found in the meat emulsion, which effect the taste and food safety; and, further, increases the salt content of the meat product producing a meat product with an inferior taste.

For these reasons, it is desired to have a process or method for producing a meat product that provides a novel means for coagulating the collagen gel on the surface of a coextruded food product. Further, it is desired to have a process that minimizes brine absorption and limits harm to the fermentation culture in the meat product and a meat product where the pH level remains relatively unchanged and the fermentation culture remains unharmed and alive in the meat product after coagulation and the taste of the meat product is not compromised by brine (salt) absorption. It is further desired to have a process and a meat product with a sufficient casing strength and that requires shorter coagulation time for producing the meat casing. It is further desired to have a process including a coagulation solution that produces a casing with minimal elasticity during further processing. It is further desired to have a process and a meat product that eliminates the need for air drying following coagulation and is economical to use in an industrial setting.

### SUMMARY OF INVENTION

The present invention relates to a coextrusion process for the production of a food product comprising the steps of forming a collagen gel that includes an amount of a cross-linking agent, coextruding an amount of a meat emulsion while simultaneously coating the exterior of the meat emulsion with the collagen gel, and exposing the collagen coated meat product with an amount of a coagulation solution that includes a highly soluble salt, water, and an alkalinity agent, where the coagulation solution has a pH range of between 10 and 14. The collagen coated meat emulsion is exposed to the coagulation solution for an amount of time sufficient to produce a meat product with a casing strength greater than 500g and where the fermented meat product has a pH range of 4 to 5.3.

The present invention further relates to the meat product produced from the process, wherein the meat product formed from the coextrusion process has a fermented pH range of 4 to 5.3, a cured collagen casing exterior with a strength of greater than 500g, and active fermentation culture in the green product. The casing further possess minimal elasticity enabling further processing such as cooking and smoking. The meat product further includes an amount of protein, an amount of a cross linking agent, such as liquid smoke, and a salt content of less than 1% by weight of the green product.

### BRIEF DESCRIPTION OF DRAWINGS

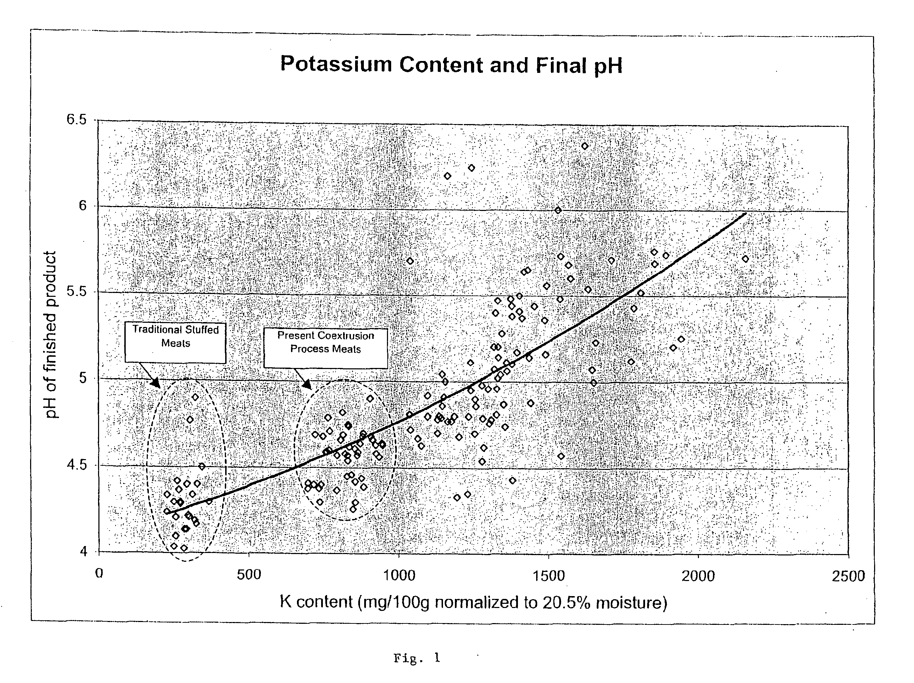

Fig. 1 is a graph comparing the pH range of meat products. The circled points on the left side of the graph, 300mg/100g represent traditional stuffed meat products, circled data in the 650mg/100g to less than 1000mg/100g range are stuffed meat products produced with the present process, data points to the right of 1000mg represent typical coextrusion casing production methods.

### DETAILED DESCRIPTION

The present invention relates to a coextrusion process comprising the steps of coating the meat product with a collagen gel that includes a cross-linking agent, and exposing the collagen gel coated meat product to a coagulation solution, which contains an amount of a coagulation ingredient such as a soluble salt and an alkalinity agent. The coagulation solution has a pH range of between 10 to 14. The coagulation solution will contact the collagen gel coated meat product for a period of time sufficient to form a meat product with a casing strength greater than 500g as measured by a Texture Analyzer model TA-XT2. Further, the invention relates to the meat product produced from the process, wherein the meat product has a sufficient casing strength, decreased brine (salt) absorption, a fermented pH range of 4 to 5.3, and active fermentation culture in the green product.

The instant process relates to the production of sausage products, it may also be used in the production of any collagen coated food product, such as meat, fish, seafood, eggs, vegetables, fruits, cheeses, or combinations thereof. The following description of the process will be in terms of production of a meat product, the process should not be interpreted to be limited to that particular food product.

"Meat" refers to any type of meat emulsion in a semisolid state.

"Coagulation" is a term of art in the production of collagen coated meat material, and is not strictly scientific in the sense in which it is used. Coagulation as it is used in this specification refers to the step involving hardening and stabilization of the meat product casing. This is principally achieved in two ways: first by removal of water from the collagen gel, and second by cross-linking the collagen fibers.

"Brine" is a term that refers to a coagulation solution that includes an amount of a highly soluble salt.
"Green meat" is a term that refers to the meat product after coextrusion and coagulation of the casing, but before further processing such as cooking or smoking.

The present process produces a meat product that is superior to any coextruded meat product on the market. The process ensures the fermentation culture found in the meat emulsion is protected from over-absorption of the brine solution during the coagulation process. The limited brine absorption prevents the brine (salt) from significantly raising the pH of the fermented meat emulsion, or increasing the salt content of the meat emulsion. The buffering effect of the brine is reduced and the final meat product has a pH in the range of 4 to 5.3 and an active fermentation culture. Further, the process and coagulation solution produces a final casing with minimal elasticity and sufficient strength for further processing, such as cooking and smoking.

The process is initiated with the production of a meat emulsion, such as a paste mix or other semisolid state meat solution. The meat emulsion can be any combination of meat including pork, beef, poultry, fish, seafood, and combinations thereof and further can include vegetables, fruit, cheese, egg, and combinations thereof in the meat emulsion. The meat emulsion is then delivered to a coextruder, which is a delivery device that includes any meat metering device known in the industry.

In optional embodiments, the meat emulsion will include an amount of a fermentation culture. The fermentation culture enhances flavor and overall mouth feel characteristics in the meat product. Any fermentation culture known in the industry can be used provided that it functions as an acid producing bacteria, such as a lactic acid producing bacteria. The culture functions to convert sugars found in the meat emulsion into lactic acid enhancing the flavor and overall mouth feel, and increases shelf stability and overall food safety. In further optional embodiments, encapsulated acids can be added to the meat emulsion. Any ingredient known in the industry that functions to create acid, such as lactic acid in the meat emulsion or mimics the function of the fermentation culture can be added to the meat emulsion.

The coextruding apparatus typically has two separate pumping system, one designed for the meat emulsion and the second configured for dispersing the collagen gel. Virtually, any coextruder known in the industry can be used, examples include conical extruders or contra-rotating disc extruders. Coextruders function to extrude the meat emulsion, while simultaneously expelling an amount of collagen gel to completely coat the exterior of the meat emulsion.

Typically, the amount of collagen gel coextruded around the exterior of the meat emulsion is between a range of 3% to 18% by weight of the gel coated meat emulsion or the finished product. The typical thickness of the collagen gel on the meat emulsion is between a range of 0.31mm to 0.75mm. In general, smaller diameter sausages have a higher percent-by-weight of gel.

The collagen gel comprises water, protein (collagen), cellulose, and an acid. Typically, the collagen gel includes ranges between percentages by weight of 90% to 97% water, 2% to 10% protein, 0.2% to 2% cellulose, and 0.05% to 0.2% of an edible food stable acid. In optional embodiments, the collagen gel includes an amount of protein greater than 3% by weight. In other optional embodiments, the collagen gel includes an amount of protein greater than 4% by weight or greater than 6% by weight of the collagen gel.

The collagen gel can be any collagen gel known in the industry used for the production of meat casings. Examples of collagen gel producers include Nippi, Inc., Devro, Inc., and Nitta Casing, Inc. Any collagen gel can be used that has an array of independent, intact, and evenly distributed collagen fibers that when coagulated produces a final casing product with superior strength characteristics.

Prior to or during the coating of the meat emulsion with the collagen gel, a chemical modifying agent is blended with the collagen gel or coated on the meat emulsion. One chemical modifying agent blended with the collagen gel prior to the collagen gel coating the meat emulsion is a cross-linking agent. Examples of cross-linking agents include aldehydes, phenols, mailose, liquid smoke, and combinations thereof. Any cross-linking agent can be used that functions to promote speed of strength of the collagen gel during the coagulation process or that increases the casing strength of the finished meat product. The amount of cross-linking agent used is between the range of 0.5% to 10% by weight of the gel. In optional embodiments, the amount of a cross-linking agent used is between the range of 1% to 5% by weight of the gel.

In optional embodiments, the cross-linking agent can be directly injected into the collagen gel as the gel is fed to the extruder head. In further optional embodiments, the injection or mixing of the cross-linking agent into the collagen gel occurs under a vacuum to minimize air in the collagen gel.

In optional embodiments, the collagen gel may also contain other functional ingredients such as colorants, fillers, cellulose fibers, organic acids, plasticizers, and combinations thereof. These other functional ingredients can be found in varying amounts ranging from 0.1% to 10% by weight of the gel and function to impart distinct characteristics to the meat product, including texture, flavor, mouth feel, color, shelf stability, and general food safety.

After extruding and coating the meat emulsion with the collagen gel, the collagen gel coated meat emulsion is contacted with a coagulation solution, known in the industry as a brine. The brine is a liquid solution that contains an amount of coagulation ingredient, typically a highly soluble salt in water. In one embodiment the brine solution includes dipotassium phosphate (DKP). Typically, the amount of DKP ranges from 35% to 70% by weight of the brine solution. In optional embodiments, the solution contains as much DKP as possible, while still remaining in solution within the water. In other optional embodiments, any highly soluble salt known in the industry can be used, examples include potassium tripolyphosphate (KTPP) and potassium tetrapolyphosphate (TKPP). The coagulation solution is an osmotic agent with a high pH that functions to coagulate the collagen gel, producing an exterior casing on the meat emulsion. The highly osmotic coagulation solution provides for faster drying of the collagen gel, which limits the exposure time of brine to the meat emulsion. This further limits the amount of migration of the brine solution into the meat emulsion eliminating the off taste associated with current industry methods.

To promote an increase in the speed of the coagulation and cross-linking of the collagen gel and minimize elasticity of the collagen casing, an amount of an alkalinity agent is added to the brine solution to achieve a pH range of 10 to 14. In optional embodiments, the pH range will be between 11 to 13. The alkalinity agent can be any agent known in the industry that functions to increase the overall pH of the brine solution and is edible. Typically, the alkalinity agent is NaOH. In optional embodiments, the alkalinity agent can be KOH or combinations of any alkalinity agent. The amount of the alkalinity agent used is typically between the range of 1% to 15% by weight of the coagulation solution. In optional embodiments the amount of alkalinity agent used is between the range of 5% to 10% by weight of the coagulation solution.

The alkalinity agent further functions to minimize elasticity of the meat product casing, therefore producing a meat product with minimal stretching or sagging of the casing. Minimizing the elasticity of the meat product produces a meat product of a higher quality and minimal potential for "touchers." Touchers are a term of art used in the industry to describe a second grade product, where collagen encased meat products that are hung for further processing touch each other and create a weld between the products, therefore reducing the quality.

Contacting the collagen gel coated meat product with the coagulation solution coagulates the exterior collagen gel producing a casing with sufficient strength to allow the meat product to be hung for further processing. The coagulation solution can be applied to the exterior of the collagen gel coated meat product by any means known in the industry. Methods include spraying the coagulation solution on the meat product. In optional embodiments, a coagulation bath is used for passing the gel coated meat through the coagulation solution. Any method known in the industry can be employed to contact the coated meat product with the coagulation solution as long as the entire surface of the meat product is coated with the coagulation solution.

Exposure time of the coagulation solution to the collagen gel produces a casing in an amount of time between the range of 3 seconds to 10 minutes, typical exposure is between the range of 10 seconds to 90 seconds. The time is sufficient to coagulate the collagen gel and produce a typical casing strength of 1000g (casing strength is measured using a Texture Analyzer model TA-XT2 at 5 mm/sec with jaws set 3 mm apart) or greater. In optional embodiments the casing strength will be 500g or greater. In further optional embodiments the casing strength will be greater than 1500g. Still further optional embodiments the casing strength will be greater than 5000g.

The quick coagulation of the collagen gel will produce a green meat product with similar characteristics and flavor to that of a traditionally stuffed meat product. Coagulation of the collagen gel typically forms a casing in a range of 2 to 20 seconds on the exterior of the meat product reducing permeability and minimizing the absorption of the brine solution and salts associated with the brine into the meat emulsion. Reducing the time required to coagulate the collagen gel minimizes the amount of brine and salt that will be absorbed by the meat product. Typically, the amount of brine absorbed is between the range of 0.2% to 3% by weight of the meat product. Minimizing the amount of brine absorbed by the meat product, produces a product with flavor and mouth feel characteristics of superior quality. Further, the reduction in brine absorption ensures the culture remains active through fermentation and the pH level of the finished meat product remains in the range of 4 to 5.3.

In an optional embodiment, a thickener can be added to the coagulation solution. Any thickener known in the industry can be added to the brine solution. The thickener functions to limit the absorption by the meat product of the coagulation solution and in the present case the brine.

Reduction of the brine absorption by the meat product also minimizes harm to the fermentation culture present in the meat emulsion. Coextrusion processes currently used in the industry allow the coagulation (brine) solution to penetrate the collagen gel, resulting in harm to the fermentation culture due to the basic nature of the solution and the high salt content. Absorption of the brine increases the pH and salt of the meat product and creates a toxic environment for the fermentation culture. By minimizing absorption of the brine the fermentation culture remains active and is not impeded from further fermentation. This ensure continued lactic acid production, enhancing the flavor and food safety of the meat product.

After the coagulation of the collagen surface of the meat product has occurred, no further drying is required to strengthen the casing, and the meat product is ready for further processing, which includes any means known in the industry including fermentation, cooking, and smoking. To ensure a superior meat product the excessive brine left on the meat product can be removed through any means known in the industry, including water rising. The excessive brine is then further processed for re-use in subsequent processing.

### EXAMPLES

The following Example illustrates the process and meat product produced.

### Example 1

The following example will provide a step-by-step process for producing a sausage product.

To begin an amount of a meat emulsion is formed that includes an amount of meat (beef and chicken), which is 97% by weight of the meat emulsion and 3% by weight spices for the meat emulsion. Water is then added to the meat emulsion to ensure the meat emulsion is in a semisolid state to allow easy processing.

The meat emulsion was fed through a coextrusion apparatus. The extrusion speed of the meat emulsion fed the meat emulsion at a rate of 6300 g/min, with a diameter of 13mm. The coextrusion apparatus further includes a Townsend Protecon head, produced by Townsend Engineering. The Townsend Protecon head delivered an amount of collagen gel to coat the exterior of the meat emulsion. The inner extruder operated at a speed of 474 rpm while the outer extruder operated at a speed of 384 rpm. The dual delivery consists of counter-rotating plates that create a cross-weave of the collagen for adequate radial strength of the casing.

An amount of collagen gel was obtained from Devro Inc., consisting of 5% by weight protein (collagen), 0.5% by weight cellulose, 0.2% by weight HCl, and 94.3% by weight water. The collagen gel was stored at a temperature of 40°F prior to extrusion. An amount of a cross linking agent, liquid smoke was preblended in the amount of 2.5% by weight of the collagen gel. The amount of collagen gel fed through the extrusion head was 750 g/min.

After coextruding of the meat emulsion, the collagen gel coated meat product was exposed to a coagulation solution (brine). The brine solution was composed of 57% by weight dipotassium phosphate (DKP), 7% by weight NaOH, and 36% by weight water. The brine was maintained at a temperature of 90°F. The brine was then sprayed on the collagen gel coated meat product initiating the coagulation of the collagen gel and forming the casing. The brine was exposed to the collagen gel for typically 35 seconds.

The resulting casing coated green meat product was then hung on a j-hook conveyor and further transferred to stainless steel processing rods, where the meat product was further processed via typical industry processing, such as fermentation, smoking, and/or cooking.

The meat product produced from the process discussed above possesses characteristics similar to traditional meat stuffed products. The meat product produced had a casing strength of 2000g, meat that has a pH range of 4 to 5.3, and the amount of salt absorbed form the brine of less than 1% by weight of green meat.

Thus, there has been shown and described a process for producing a coextruded meat product which fulfills all the objects and advantages sought therefore. It is apparent to those skilled in the art, however, that many changes variations, modifications, and other uses and applications to the coextrusion and coagulation process to produce the superior meat product are possible, and also such changes, variations, modifications, and other uses and application which do not depart from the spirit and scope of the invention are deemed to be covered by the invention, which is only limited by the claims which follow.

## Claims

1. A process for producing a collagen encased food product, comprising:
(a) coextruding a food emulsion and coating the food emulsion exterior with a collagen gel comprising collagen and a cross linking agent, producing a collagen gel coated food product; and
(b) contacting the collagen gel coated food product with a coagulation solution comprising an amount of a coagulation ingredient, water, and an alkalinity agent whereby the coagulation solution has a pH range of between 10 and 14, forming a casing and thereby producing the collagen encased food product.

2. The process of claim 1, wherein the collagen gel has a protein content range of between 3% and 10% by weight of the gel.

3. The process of claim 1, wherein the cross linking agent is selected from the group consisting of aldehydes, phenols, liquid smoke, and combinations thereof.

4. The process of claim 1, wherein the process comprises contacting the collagen gel coated food product with the coagulation solution forms the casing in an amount of time ranging between 3 seconds and 10 minutes.

5. The process of claim 1, wherein the coagulation ingredient is selected from the group consisting of dipotassium phosphate, potassium tripolyphosphate, potassium tetrapolyphosphate, and combinations thereof.

6. The process of claim 1, wherein the coagulation solution has a pH range between 11 and 13.

7. The process of claim 1, wherein the alkalinity agent is selected from the group consisting of NaOH, KOH, and combinations thereof.

8. The process of claim 1, wherein the amount of the alkalinity agent ranges between 1% and 15% by weight of the coagulation solution.

9. The process of claim 1, wherein the collagen encased food product has a casing strength of at least 500g.

10. The process of claim 1, wherein the collagen encased food product has a pH range between 4 and 5.3.

11. The process of claim 1, wherein the food emulsion is a meat emulsion containing a fermentation culture.

12. The process of claim 1, wherein the food emulsion contains an encapsulated acid.

13. The process of claim 11, wherein the fermentation culture remains active after the collagen encased food product is produced.

14. The process of claim 1, wherein the coagulation solution further includes a thickener.

15. A process for producing a collagen encased sausage comprising:
(a) coextruding a sausage emulsion and coating the exterior of the sausage emulsion with a collagen gel comprising collagen and a cross linking agent, producing a collagen gel coated sausage; and
(b) contacting the collagen gel coated sausage with a coagulation solution comprising an amount of a dipotassium phosphate, water, and an amount of an alkalinity agent comprising NaOH, KOH, and combinations thereof, whereby the coagulation solution has a pH range between 10 and 14, for an amount of time between 3 seconds to 10 minutes, forming a casing and thereby producing a collagen encased sausage with a casing strength greater than 500g.

16. The process of claim 15, wherein the sausage emulsion contains a fermentation culture.

17. The process of claim 15, wherein the sausage emulsion contains an encapsulated acid.

18. An extruded meat product comprising:
(a) a cured collagen casing exterior with a strength of greater than 500g; and,
(b) a meat emulsion with a fermentation culture.

19. The extruded meat product of claim 18, wherein the meat product contains a live fermentation culture after the collagen casing exterior has been cured.

20. The extruded meat product of claim 18, wherein the cured collagen exterior includes an amount of a cross-linking agent.

21. An uncured extruded meat product comprising:
(a) a meat emulsion;
(b) a collagen gel coating comprising collagen and a cross linking agent; and,
(c) a coagulation solution comprising dipotassium phosphate and NaOH in contact with the collagen gel coating.

22. The extruded meat product of Claim 21, wherein the meat emulsion contains a fermentation culture.

23. The extruded meat product of Claim 21, wherein the meat emulsion contains an encapsulated acid.

24. A coagulation solution for the production of collagen encased food products comprising:
(a) a coagulation ingredient of dipotassium phosphate,
(b) water, and,
(c) an alkalinity agent, thereby producing a coagulation solution with a pH range between 10 and 14.

25. The coagulation solution of claim 24, wherein the coagulation ingredient is further selected from the group consisting of potassium tripolyphosphate, potassium tetrapolyphosphate, and combinations thereof.

26. The coagulation solution of claim 24, wherein the alkalinity agent is selected from the group consisting of NaOH, KOH, and combinations thereof.
